# EUROPEAN PATENT SPECIFICATION

(11) **EP 3 033 521 B1**
(45) Date of publication and mention of the grant of the patent: **17.05.2017**
(21) Application number: 14786278.3
(22) Date of filing: 01.08.2014
(51) Int. Cl.: F03B 13/00

(54) **INTEGRATED DEVICE TO EXPLOIT THE ENERGY OF A FLUID STREAM THAT FLOWS IN A PIPING FOR ITS DIRECT TRANSFORMATION INTO MECHANIC OR ELECTRIC ENERGY**
INTEGRIERTE VORRICHTUNG ZUR NUTZUNG DER ENERGIE EINES FLUIDSTROMS IN EINEM LEITUNGSSYSTEM ZUR DIREKTEN UMWANDLUNG IN MECHANISCHE ODER ELEKTRISCHE ENERGIE
DISPOSITIF INTÉGRÉ POUR EXPLOITER L'ÉNERGIE D'UN COURANT DE FLUIDE S'ÉCOULANT DANS UNE TUYAUTERIE EN VUE DE SA TRANSFORMATION DIRECTE EN ÉNERGIE MÉCANIQUE OU ÉLECTRIQUE

(30) Priority: 16.08.2013 IT FI20130197
(43) Date of publication of application: 22.06.2016
(73) Proprietor: Fei, Fernando, 58100 Grosseto (GR) (IT)
(72) Inventor: Fei, Fernando, 58100 Grosseto (GR) (IT)
(74) Representative: Fanfani, Stefano
(86) International application number: PCT/IB2014/063623
(87) International publication number: WO 2015/022598

(56) References cited:
- WO-A1-2011/019094
- WO-A1-2012/054276
- JP-A- H09 177 652
- JP-A- 2006 189 014
- US-A- 622 474
- US-A1- 2006 237 972

## Description

### Technical field

The present invention belongs to the sector of the hydraulic motive machines, in particular to those machines which are driven into motion by a fluid stream flowing inside a water pipe and even, preferably, a penstock.

The present invention finds a preferred, even though not unique, application in the pipes of aqueducts, oil pipelines and the like, which transfer a fluid between two points even in the presence of a limited difference in height.

As a matter of fact, the present invention has been developed to operate at the best even in the absence of heads or penstocks, like those which, on the contrary, are necessary for the operation of the hydraulic turbines of traditional types.

### Present status of the art

Whereas the basic principles of operation of turbomachines are known for long time, the will to exploit resources so far neglected because of feasibility or economical convenience reasons fostered the research for new technical solutions.

An example thereof is represented by the turbine for undercurrents described in patent application US 4163904 A (SKENDROVIC LAWRENCE).

Still now the energy of fluids flowing through piping systems, for instance aqueducts or oil pipelines, is often unavoidably dissipated or not adequately exploited.

The scarce exploitation of alternative power sources is also due to the need for adopting special measures in similar applications. For instance, the characteristics of the fluids transported through the piping systems shall be preserved and the necessary safety conditions shall be met. Just as an example, special materials and seals shall be used in order not to pollute the water used for human consumption.

The impact onto the existing system, be it a piping or a dissipator system, shall also be taken into consideration, nor can the effects onto the stream be disregarded.

Said patent application US 4163904 A describes a turbine that moves an external shaft connected to an electric generator thanks to the exploitation of the undercurrents. The application of the just described device to piping systems results in a number of drawbacks, first of all in a strong interaction with the stream determined, for instance, by the presence of a central axle.

The latter problem had already been coped with, still in association with submarine applications, in patent AT 101192 B (SUESS EDUARD ING). This patent describes a turbine that does not require a central axle so as to limit the interaction with the stream.

Apart from the sector of the submarine applications, patent application US 2005031442 A1 (WILLIAMS HERBERT LEHMAN) limits its own impact onto the fluid stream through a hydroelectric turbine by way of a rotor with no central axle which rotates with respect to a stator. The latter is either anchored with respect to the bottom of a water body (in the case of applications featuring small heads), fixed to a water pipe (in the case of applications featuring big heads) or attached inside a piping system. The relative rotation of said rotor with respect to the stator transforms a part of the energy of the stream into electric energy by means of a set of magnets which allows to generate an electric field. However, the just described solution is particularly complex and unavoidably transforms the collected energy into electric energy.

This limitation also affects the solution described in patent application WO 2012054276 (LOUISIANA TECH RES FOUNDATION), relevant to a new turbine provided with a rotating stator put inside an electric power generator, to the inner surface of which blades are fixed.

Unlike the patent applications mentioned above, the device according to patent application WO 2011019094 (CRITICAL FACILITY SERVICE CORP) provides flexibility in terms of applications but, owing to the limited dimensions of its rotor area, it requires the presence of an appropriate input section, with the complications resulting therefrom. Surprisingly, the device according to the present patent application limits the problems related to the interaction with the fluid thanks to the adoption of new solutions which allow to fit the operating modes of the device to the conditions of the stream.

### Purposes and summary of the invention

The device according to the present patent application solves the problems mentioned above in an innovative manner in order to partially exploit the energy of a fluid stream flowing through a piping system, even in the absence of heads or penstocks.

Specifically, said device provides mechanic or electric energy all along a piping system. This feature, generally worth to recover an energy that would otherwise go lost or unused, as in the case that variations were required in the operating pressure between two sections of a piping system, is particularly interesting in the case of long water pipes crossing places difficult to reach or for which the transport of energy would not be economically sustainable. The device according to the present patent application can be easily installed between two sections of a piping and comprises a stub (1) rotationally coupled therewith. Means (2) stand on said stub to interact with the fluid stream flowing through the piping, so as to determine a rotation. A part of the energy of the fluid is thus converted into mechanic energy in the form of stub rotation; said energy being directly exploited on the surface of the latter. Hence, the amount of the mechanic energy extracted from the fluid does not exclusively depend on the characteristics of said interaction means (2) but also on the moment of inertia of said stub (1).

If said mechanic energy is to be correctly exploited locally, said device can be provided with means to exploit the mechanic energy comprising for instance, crown gears and pinions or belts and pulleys or other transmission systems.

In order to make the mechanic energy of said stub (1) easily exploitable, such energy can be transferred to an external driving shaft (5). Advantageously can the latter operate a speed variator assembly (6) so as to adjust the ratio between the angular speed of said driving shaft (5) and that of the driven shaft (7) and, consequently, the ratio between the angular speed of said driven shaft (7) and that of the stub (1). The overall gear ratio affects the action of said interaction means (2) onto the stream and can conveniently vary in accordance with the operating conditions of the piping as well as those of the user. Advantageously can said speed variator assembly (6) be an automatic one and even be possibly assisted by a specially designed software, so as to maximize efficiency or extracted power.

For instance, the speed variator assembly (6) could be particularly used for a gradual start-up of the device or in the case of changes in the head or fluid stream conditions, possibly measured by means of at least one pressure or speed sensor installed inside the water pipe or, indirectly, by measuring the speed of rotation of said stub (1). Still further, said speed variator assembly (6) caters for the effectiveness and security of the device, by making it possible to limit the angular speed of said driven shaft (7).

Surprisingly, the device according to the present patent application allows a conversion of the energy of the fluid also, or only, into electric energy. As a matter of fact, said device comprises a cylindrical counter-rotor (8) which, in association with the rotation of said surface of said stub, allows to generate electric energy thanks to appropriate means, for instance magnets and/or conductors, placed on the latter and/or on said cylindrical counter-rotor (8). This way, said stub (1) and said cylindrical counter-rotor (8) originate an electric machine integral with the piping, while avoiding the risk of polluting the fluid.

Advantageously, in order to limit the impact of the rotation of the stub (1) onto the stream, can said cylindrical counter-rotor (8) rotate in the direction opposite to that of said stub (1), being it driven into rotation by said means used to exploit the mechanic energy of the surface of said stub (1).

The speed of rotation of said stub (1) and that of said cylindrical counter-rotor (8) can be properly set by means of said transmission systems and/or said speed variator assembly (6). This adjustment can also take place automatically, by using a variator assisted by a specially designed software, still in order to maximize efficiency or extracted power. According to a particularly complete embodiment, the variator assembly can also comprise the mechanisms necessary to reverse the direction of rotation.

### Brief description of the drawings

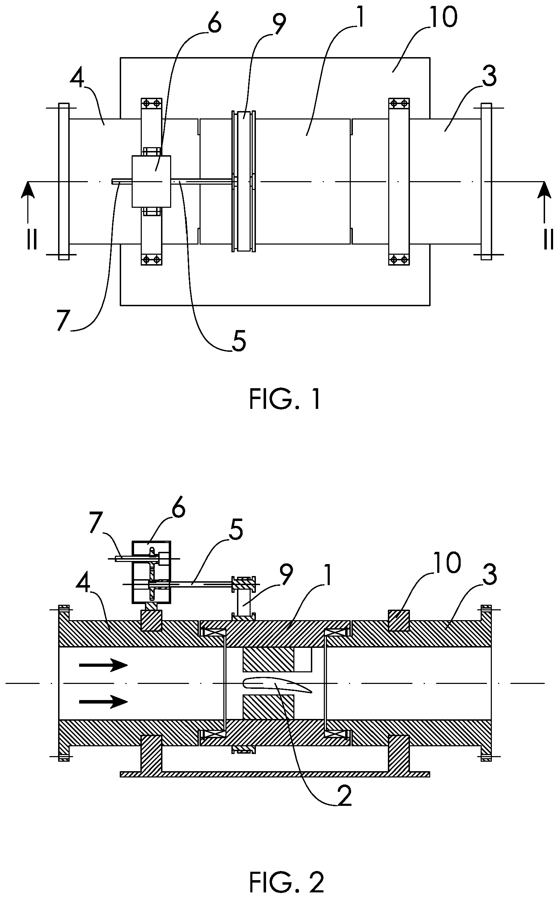

**Fig. 1** shows a top view of the device according to the present patent application without a counter-rotor. The figure clearly shows the stub (1), interposed between the two sections (3, 4) of a fixed piping, the external driving shaft (5), the speed variator assembly (6), the driven shaft (7), the transmission belt (9), and the support (10) anchored to ground. The figure also shows the trace of the cross-section plane as per Fig. 2.
**Fig. 2** shows a cross-section view of the device shown in Fig. 1, from which it is possible to infer the operation of the device. The fluid, which flows through a piping of which two section (3, 4) are shown, drives the stub (1) into rotation by means of blades (2), which are four in the embodiment represented here. Conversely, the rotation of said two sections (3, 4) of the piping is prevented by a support (10). A transmission belt (9), moved by the outer surface of said stub, operates a driving shaft (5) which, via a speed variator assembly (6), drives a driven shaft (7).

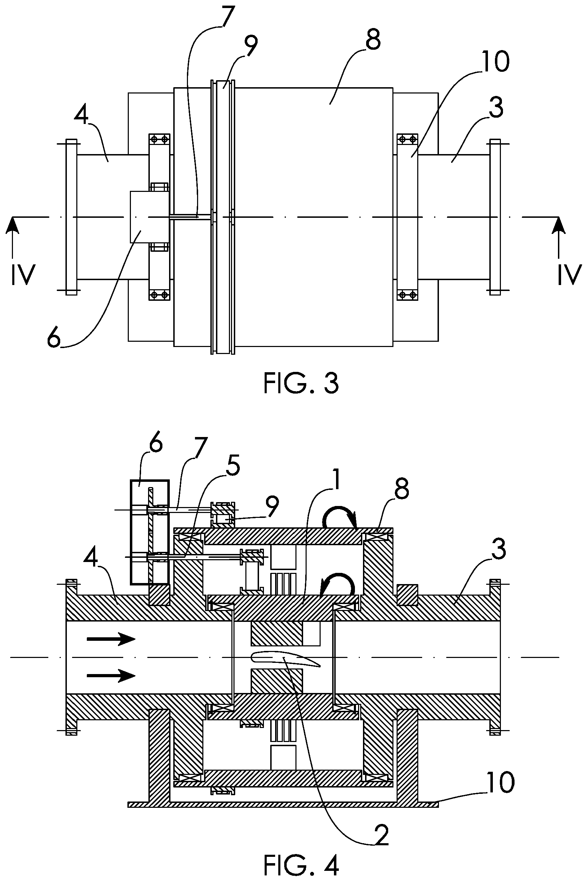

**Fig. 3** shows a top view of an embodiment of the device according to the present patent application. This figure clearly shows the counter-rotor (8), two sections (3, 4) of a fixed piping, the speed variator assembly (6), the driven shaft (7), the transmission belt (9), and the support (10) anchored to ground. The figure also shows the trace of the cross-section plane as per Fig. 4.
**Fig. 4** shows a cross-section view of the device shown in Fig. 3, from which it is possible to infer the operation of the device. The fluid, which flows through a piping of which two section (3, 4) are shown, drives into rotation the stub (1) by means of blades (2), which are four in the embodiment represented here. Conversely, the rotation of said two sections (3, 4) of the piping is prevented by a support (10). A transmission belt (9), moved by the outer surface of said stub, operates a driving shaft (5) which, via a speed variator assembly (6), drives a driven shaft (7). A cylindrical counter-rotor (8) is driven into rotation by said driven shaft (7), by way of a belt transmission (9). As indicated by the two arrows put above said stub (1) and above said counter-rotor (8), the same just called elements rotate in two opposite directions.

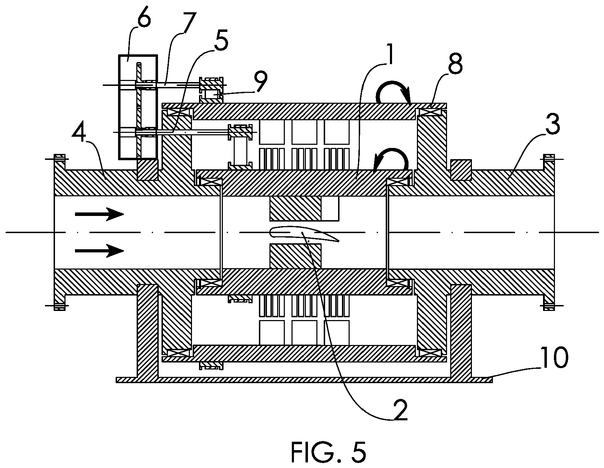

**Fig. 5** shows a cross-section view of a different embodiment of the invention, extremely similar to that shown in Fig. 3. In the embodiment shown here, the stud (1) is longer and features a greater number of pieces to generate electric energy. Concerning the trace of the cross-section plane, this includes the axis of rotation of said stub (1) as with Fig. 4. The fluid, which flows through a piping of which two section (3, 4) are shown, drives the stub (1) into rotation by means of blades (2), which are four in the embodiment represented here. Conversely, the rotation of said two sections (3, 4) of the piping is prevented by a support (10). A transmission belt (9), moved by the outer surface of said stub, operates a driving shaft (5) which, via a speed variator assembly (6), drives a driven shaft (7). A cylindrical counter-rotor (8) is driven into rotation by said driven shaft (7), by way of a belt transmission (9). As indicated by the two arrows put above said stub (1) and above said counter-rotor (8), the same just called elements rotate in two opposite directions.

### Detailed description of an embodiment of the invention

In a particularly complete embodiment, the device according to the present patent application comprises a stub (1), coaxially interposed between two sections (3, 4) of a piping, also fixed to a support (10) anchored to ground, and a counter-rotor (8), cylindrical and coaxial to said stub (1).

Appropriate means, for instance magnets and/or conductors, are installed onto said counter-rotor (8) and onto said stub (1) to generate electric energy on the basis of the relative rotation of the two elements (1 and 8).

As a matter of fact, the stub (1) is rotationally coupled with the piping, sealing means being interposed between them, and presents an inner surface on which means (2) stand to interact with the fluid stream flowing through the piping. Said interaction means (2) drive said stub (1) into rotation according to an axis coincident with the axis of said piping.

In a particularly common embodiment said means (2) used to interact with the fluid stream are properly shaped blades.

Said sealing means can be different in accordance with each specific application, and possibly include, for instance, sealing rings or lip seals or labyrinth seals or compact seals. The rotational coupling is also obtained by means of known systems, usually based on the use of bearings.

The mechanic energy determined by said rotation of the stub (1) is exploited through appropriate means located on the outer surface.

In the embodiment shown in Fig. 4 these exploitation means are magnets and a kinematic mechanism. Said kinematic mechanism transmits the rotatory motion of said stub (1) to an external driving shaft (5) by way of a belt transmission. Said driving motor (5) operates a speed variator assembly (6) to adjust the ratio between the angular speed of said driving shaft (5) and that of the driven shaft (7).

In the case of frequent variations in the operating conditions or in order to limit the interventions by a human operator, said speed variator assembly (6) is possibly an automatic one assisted by sensors and by a specifically developed software.

In the embodiment here described, said kinematic mechanism exclusively operates said cylindrical counter-rotor (8), so that the latter is counter-rotating with respect to said stub (1). The relative rotation thus obtained allows to increase and optimize the generation of electric energy.

In order to fit the operation of the device to the different user's demands and to the possible changes in the stream and in the operating conditions, for instance upon start-up, said automatic speed variator assembly (6) modifies its gear ratio as a function of some representative parameters. A preferred embodiment comprises at least one static pressure and/or total pressure sensor located inside the water pipe, one sensor measuring the speed of rotation of said stub (1), and one output stream sensor. Advantageously can the device include a sensor that measures the speed of rotation of said counter-rotor (8) used by said speed variator assembly (6) to prevent undesired values of speed from being reached.

As a matter of fact, the generated electric power varies as a function of the angular speed of said stub (1) and of the torque applied thereto. Both these quantities are representative of the impact the device exerts onto the fluid stream inside the piping.

In a particularly complete embodiment said driving shaft (5) also feeds a power takeoff which makes mechanic energy available locally.

In a preferred embodiment, in order to limit the impact onto the stream inside the piping, the diameter of said stub (1) equals that of the piping.

## Claims

1. A device comprising a stub (1), interposed between two sections (3, 4) of a fixed piping, and with which it is rotationally coupled via sealing means, featuring an inner surface on which means (2) stand to interact with the fluid stream flowing through the piping, which make said stub rotate around an axis parallel to the axis of said piping, **characterized in that** it comprises a cylindrical counter-rotor (8), coaxial to said stub (1), appropriate means, for instance magnets and/or conductors, being located onto said stub (1) and onto said counter-rotor (8) to generate electric energy by way of the relative rotation of the said stub (1) and said counter rotor (8), said counter-rotor (8) being driven into rotation by said stub (1).

2. A device according to claim 1, **characterized in that** said counter-rotor (8) is counter-rotating with respect to said stub (1).

3. A device according to claim 2, **characterized in that** said counter-rotor (8) is driven into rotation by a driven shaft (7) operated, via a speed variator assembly (6), by a driving shaft (5) operated by said stub (1); said speed variator assembly (6) adjusting the ratio between the angular speed of said driving shaft (5) and that of said driven shaft (7).

4. A device according to claim 3, **characterized in that** said speed variator assembly (6) is an automatic one, possibly assisted by a specifically developed software.

5. A device according to one or several of the previous claims, **characterized in that** said driving shaft (5) is driven by said stub (1) by way of a belt transmission (9).

6. A device according to one or several of the previous claims, **characterized in that** said automatic speed variator assembly (6) modifies its own gear ratio as a function of the information coming from at least one sensor which measures the pressure and/or the speed of the fluid inside said piping.

7. A device according to one or several of the previous claims, **characterized in that** said automatic speed variator assembly (6) modifies its own gear ratio as a function of the speed of rotation of said stub (1).

8. A device according to one or several of the previous claims, **characterized in that** said automatic speed variator assembly (6) limits the angular speed of said counter-rotor (8) whenever this one reaches a preset value.

9. A device according to one or several of the previous claims, **characterized in that** said means to interact with the fluid stream are blades (2), which can be of different shapes, number, and dimensions.

10. A device according to one or several of the previous claims, **characterized in that** said two sections (3, 4) of the piping are fixed to a support (10) anchored to ground.

11. A device according to one or several of the previous claims, **characterized in that** said piping is a penstock.

12. A device according to one or several of the previous claims, **characterized in that** it comprises at least one power takeoff to operate machines of different kinds.

13. A device according to one or several of the previous claims, **characterized in that** the inner diameter of said stub (1) equals that of said fixed piping.

## Patentansprüche

1. Vorrichtung, umfassend einen Stumpf (1), der zwischen zwei Abschnitten (3, 4) einer festen Rohrleitung eingesetzt ist, mit der er drehbar über Siegelmittel gekuppelt ist, aufweisend eine innere Oberfläche, auf der sich Mittel (2) befinden, um mit dem Fluidstrom zu interagieren, der durch die Rohrleitung strömt, die dafür sorgen, dass sich der Stumpf um eine Achse dreht, die parallel zur Achse der Rohrleitung verläuft, **dadurch gekennzeichnet, dass** sie einen zylindrischen Gegenläufer (8) umfasst, der koaxial zum Stumpf (1) ist, wobei geeignete Mittel, beispielsweise Magneten und/oder Leiter, auf dem Stumpf (1) und dem Gegenläufer (8) angeordnet sind, um elektrische Energie durch die entsprechende Drehung des Stumpfs (1) und des Gegenläufers (8) zu erzeugen, wobei der Gegenläufer (8) vom Stumpf (1) in Drehung versetzt wird.

2. Vorrichtung nach Anspruch 1, **dadurch gekennzeichnet, dass** der Gegenläufer (8) sich gegenläufig zum Stumpf (1) dreht.

3. Vorrichtung nach Anspruch 2, **dadurch gekennzeichnet, dass** der Gegenläufer (8) von einer Abtriebswelle (7) in Drehung versetzt wird, die über ein Drehzahlregelungsaggregat (6) von einer Antriebswelle (5) betätigt wird, die über den Stumpf (1) betätigt wird, wobei das Drehzahlregelungsaggregat (6) das Verhältnis zwischen der Winkelgeschwindigkeit der Antriebswelle (5) und der der Abtriebswelle (7) regelt.

4. Vorrichtung nach Anspruch 3, **dadurch gekennzeichnet, dass** das Drehzahlregelungsaggregat (6) automatisch ist und möglichst durch eine speziell entwickelte Software unterstützt wird.

5. Vorrichtung nach einem oder mehreren der vorhergehenden Ansprüche, **dadurch gekennzeichnet, dass** die Antriebswelle (5) über den Stumpf (1) mittels eines Riemenantriebs (9) angetrieben wird.

6. Vorrichtung nach einem oder mehreren der vorhergehenden Ansprüche, **dadurch gekennzeichnet, dass** das automatische Drehzahlregelungsaggregat (6) seine Getriebeumsetzung abhängig von den Informationen ändert, die von mindestens einem Sensor eingehen, der den Druck und/oder die Geschwindigkeit des Fluids in der Rohrleitung misst.

7. Vorrichtung nach einem oder mehreren der vorhergehenden Ansprüche, **dadurch gekennzeichnet, dass** das automatische Drehzahlregelungsaggregat (6) seine Getriebeumsetzung abhängig von der Drehzahl des Stumpfs (1) ändert.

8. Vorrichtung nach einem oder mehreren der vorhergehenden Ansprüche, **dadurch gekennzeichnet, dass** das automatische Drehzahlregelungsaggregat (6) die Winkelgeschwindigkeit des Gegenläufers (8) begrenzt, wenn diese einen vorgegebenen Wert erreicht.

9. Vorrichtung nach einem oder mehreren der vorhergehenden Ansprüche, **dadurch gekennzeichnet, dass** die Mittel zum Interagieren mit dem Fluidstrom Schaufeln (2) sind, die von unterschiedlichen Formen, unterschiedlicher Zahl und unterschiedlichen Abmessungen sein können.

10. Vorrichtung nach einem oder mehreren der vorhergehenden Ansprüche, **dadurch gekennzeichnet, dass** zwei Abschnitte (3, 4) der Rohrleitung an einer Halterung (10) fixiert sind, die am Boden verankert ist.

11. Vorrichtung nach einem oder mehreren der vorhergehenden Ansprüche, **dadurch gekennzeichnet, dass** es sich bei der Rohrleitung um eine Druckleitung handelt.

12. Vorrichtung nach einem oder mehreren der vorhergehenden Ansprüche, **dadurch gekennzeichnet, dass** sie mindestens eine Zapfwelle umfasst, um Maschinen unterschiedlicher Arten zu betätigen.

13. Vorrichtung nach einem oder mehreren der vorhergehenden Ansprüche, **dadurch gekennzeichnet, dass** der Innendurchmesser des Stumpfs (1) gleich dem der festen Rohrleitung ist.

## Revendications

1. Dispositif comprenant un bout (1), interposé entre deux sections (3, 4) d'une tuyauterie fixe et avec laquelle il est accouplé d'une manière rotationnelle par l'intermédiaire de moyens d'étanchéité ayant une surface intérieure interceptée par des moyens (2) d'interaction avec le courant de fluide s'écoulant à travers la tuyauterie, lesquels provoquent la rotation dudit bout autour d'un axe parallèle à l'axe de ladite tuyauterie, **caractérisé en ce qu'**il comprend un contre-rotor cylindrique (8), coaxial audit bout (1), des moyens appropriés, par exemple des aimants et/ou des conducteurs, placés sur ledit bout (1) et sur ledit contre-rotor (8) pour engendrer de l'énergie électrique sur la base de la rotation relative dudit bout (1) et dudit contre-rotor (8), ledit contre-rotor (8) étant mis en rotation par ledit bout (1).

2. Dispositif selon la revendication 1, **caractérisé en ce que** ledit contre-rotor (8) est contre-tournant par rapport audit bout (1).

3. Dispositif selon la revendication 2, **caractérisé en ce que** ledit contre-rotor (8) est mis en rotation par un arbre entraîné (7) actionné, à travers un ensemble variateur de vitesse (6), par un arbre moteur (5) actionné par ledit bout (1); ledit ensemble variateur de vitesse (6) ajustant le rapport entre la vitesse angulaire dudit arbre moteur (5) et celle dudit arbre entraîne (7).

4. Dispositif selon la revendication 3, **caractérisé en ce que** ledit ensemble variateur de vitesse (6) est du type automatique, éventuellement assisté par un logiciel développée exprès.

5. Dispositif selon une ou plusieurs revendications précédentes, **caractérisé en ce que** ledit arbre moteur (5) est entraîné par ledit bout (1) à travers une transmission à courroie (9).

6. Dispositif selon une ou plusieurs revendications précédentes, **caractérisé en ce que** ledit ensemble variateur de tension automatique (6) modifie son propre rapport de transmission en fonction des informations provenant d'au moins un senseur qui mesure la pression et/ou la vitesse du fluide à l'intérieur de ladite tuyauterie.

7. Dispositif selon une ou plusieurs revendications précédentes, **caractérisé en ce que** ledit ensemble variateur de vitesse automatique (6) modifie son propre rapport de transmission en fonction de la vitesse de rotation dudit bout (1).

8. Dispositif selon une ou plusieurs revendications précédentes, **caractérisé en ce que** ledit variateur de vitesse automatique (6) limite la vitesse angulaire dudit contre-rotor (8) lorsque celui-ci atteint une valeur prédéterminée.

9. Dispositif selon une ou plusieurs revendications précédentes, **caractérisé en ce que** lesdits moyens d'interaction avec le courant de fluide sont des palettes (2), lesquelles peuvent être de différentes formes, quantités, et dimensions.

10. Dispositif selon une ou plusieurs revendications précédentes, **caractérisé en ce que** lesdites deux sections (3, 4) de la tuyauterie sont fixées à un support (10) ancré à la terre.

11. Dispositif selon une ou plusieurs revendications précédentes, **caractérisé en ce que** ladite tuyauterie est une conduite forcée.

12. Dispositif selon une ou plusieurs revendications précédentes, **caractérisé en ce qu'**il comprend au moins d'une prise de force pour actionner des machines de différents types.

13. Dispositif selon une ou plusieurs revendications précédentes, **caractérisé en ce que** le diamètre intérieur dudit bout (1) est égal à celui de ladite tuyauterie fixe.
